# EUROPEAN PATENT APPLICATION

(11) **EP 3 205 955 A1**
(43) Date of publication of application: **16.08.2017**
(21) Application number: 17155405.8
(22) Date of filing: 09.02.2017
(51) Int. Cl.: F25B 13/00, F24F 11/00, F24H 4/02, F24D 3/18, F24D 5/12, F24D 11/02, F24D 19/10, F25B 47/02

(54) **AIR CONDITIONER**

(30) Priority: 12.02.2016 JP 2016024907
(71) Applicant: Mitsubishi Heavy Industries Thermal Systems, Ltd., Minato-ku Tokyo 108-8215 (JP)
(72) Inventor: NAKAMOTO, Masahiko, TOKYO, 108-8215 (JP); YAMAGUCHI, Toru, TOKYO, 108-8215 (JP)
(74) Representative: Intès, Didier Gérard André

(57) **Abstract**

An air conditioner includes a water temperature control unit 40 which is connected in parallel to indoor units 3A and 3B and includes a water heat exchanger 51 exchanging heat between water and a refrigerant supplied from an outdoor unit 2, the water temperature control unit 40 includes a water temperature control expansion valve 52 which is provided at a refrigerant inlet side of the water heat exchanger 51, a bypass pipe 53 which bypasses the water temperature control expansion valve 52 and the water heat exchanger 51, and a bypass valve 54 which is provided at the bypass pipe 53, and the air conditioner further includes an anti-freezing control unit which prevents water from being frozen by closing the water temperature control expansion valve 52 and opening the bypass valve 54 when it is determined that water flowing through the water heat exchanger 51 is going to be frozen during an operation in which the water heat exchanger 51 serves as an evaporator.

## Description

### Field

The present invention relates to an air conditioner which includes an indoor air heat exchanger exchanging heat between a refrigerant and indoor air and a water heat exchanger exchanging heat between a refrigerant and water.

### Background

In general, there is known a cooling device which includes a compressor compressing a refrigerant, a condenser, a depressurization unit, and an evaporator and cools a target cooling fluid by circulating a refrigerant in these components and exchanging heat between the refrigerant and the target cooling fluid through the evaporator. In this kind of cooling device, there is proposed a technology of preventing the target cooling fluid from being frozen in the evaporator (for example, see Patent Literature 1).

### Citation List

### Patent Literature

Patent Literature 1: JP 2009-243828 A

### Summary

### Technical Problem

By the way, in recent years, there has been developed an air conditioner which includes an outdoor unit including a compressor compressing a refrigerant and an outdoor heat exchanger, an indoor unit including an indoor heat exchanger exchanging heat between indoor air and a refrigerant supplied from the outdoor unit, and a water temperature control unit including a water heat exchanger disposed in parallel to the indoor unit and exchanging heat between water and a refrigerant supplied from the outdoor unit. In this kind of air conditioner, there is a concern that water inside the water heat exchanger may be frozen when a refrigerant evaporation temperature decreases during an operation in which each of the indoor heat exchanger and the water heat exchanger serves as an evaporator and which is, for example, a defrost operation of the outdoor heat exchanger. In this case, the entire operation of the air conditioner can be stopped due to the abnormality thereof in order to prevent the water inside the water heat exchanger from being frozen, but a problem arises in that the operations of the outdoor unit and the indoor unit are stopped.

The invention is made in view of the above-described circumstances and an object of the invention is to provide an air conditioner capable of preventing water inside a water heat exchanger from being frozen without stopping operations of an outdoor unit and an indoor unit. Solution to Problem

In order to solve the above-described problem and achieve the object, an air conditioner comprises an outdoor unit which includes a compressor compressing a refrigerant and an outdoor heat exchanger exchanging heat between the refrigerant and external air, an indoor unit which is connected to the outdoor unit through a unit connection pipe and includes an indoor heat exchanger exchanging heat between indoor air and the refrigerant supplied from the outdoor unit, and a water temperature control unit which is connected to the outdoor unit in parallel to the indoor unit and includes a water heat exchanger exchanging heat between water and the refrigerant supplied from the outdoor unit. The water temperature control unit includes a control valve which is provided at a refrigerant inlet side of the water heat exchanger, a bypass pipe which bypasses the control valve and the water heat exchanger, and a bypass valve which is provided at the bypass pipe. The air conditioner further includes a freezing determination unit which determines whether the water flowing through the water heat exchanger is going to be frozen during an operation in which the water heat exchanger serves as an evaporator, and an anti-freezing control unit which prevents the water from being frozen by closing the control valve and opening the bypass valve when it is determined that the water is going to be frozen.

According to this configuration, when it is determined that the water flowing through the water heat exchanger is going to be frozen, the anti-freezing control unit closes the control valve and opens the bypass valve to prevent the refrigerant from flowing into the water heat exchanger. Further, since the high-temperature refrigerant bypasses the water heat exchanger, it is possible to expect a case where an operation point changes in a direction in which the freezing of water is prevented in accordance with an increase in low pressure of the air conditioner. For this reason, it is possible to prevent the water flowing through the water heat exchanger from being frozen without disturbing the operations of the outdoor unit and the indoor unit.

In this configuration, the freezing determination unit may determine that the water is going to be frozen when a temperature of the water flowing through the water heat exchanger becomes lower than a freezing reference temperature. According to this configuration, it is possible to simply determine whether the water flowing through the water heat exchanger is going to be frozen even when water in a condition (for example, a water temperature or water quantity) other than a specification range is used in the water temperature control unit.

Further, the freezing determination unit may determine that the water is going to be frozen when a temperature of the refrigerant flowing through the water heat exchanger becomes lower than the freezing reference temperature. According to this configuration, it is possible to detect a possibility that the water is going to be partly frozen in the vicinity of the refrigerant inlet inside the water heat exchanger when the water temperature at the outlet and the inlet of the water heat exchanger is equal to or higher than the freezing temperature.

Further, the freezing determination unit may determine that the water is going to be frozen when a suction pressure of the compressor becomes lower than a predetermined low-pressure protection value set in consideration of pressure loss generated when the refrigerant flows through the unit connection pipe. According to this configuration, it is possible to highly accurately determine whether the water flowing through the water heat exchanger is going to be frozen even in a configuration in which the water temperature control unit is disposed at a position separated from the outdoor unit. Further, it is possible to detect a possibility that the water is going to be partly frozen in a microscopic structure inside the water heat exchanger even when the refrigerant circulation amount is small and the refrigerant temperature sensor cannot highly accurately detect the refrigerant temperature so that a possibility of the freezing of the water cannot be detected.

Further, the air conditioner may include a low-pressure protection value correction unit which corrects the low-pressure protection value to a high value when a temperature of the refrigerant flowing through the water heat exchanger falls to an anti-frost temperature higher than the freezing reference temperature and corrects the low-pressure protection value to a low value when the temperature of the refrigerant rises to an anti-frost cancellation temperature higher than the anti-frost temperature. According to this configuration, since the low-pressure protection value which is a reference for determining whether the water is going to be frozen is corrected in accordance with the operation state of the water temperature control unit, it is possible to further improve the determination accuracy.

Further, the operation in which the water heat exchanger serves as the evaporator may include a defrost operation of preventing a frost of the outdoor heat exchanger. According to this configuration, since it is possible to prevent the refrigerant from flowing into the water heat exchanger by closing the control valve and opening the bypass valve when it is determined that the water is going to be frozen during the defrost operation, it is possible to prevent the water flowing through the water heat exchanger from being frozen. Further, since it is possible to draw heat from the indoor air in the indoor heat exchanger of the indoor unit during the defrost operation by exchanging heat between the indoor air and the refrigerant supplied from the outdoor unit, it is possible to continuously perform the defrost operation. Advantageous Effects of Invention

According to the invention, when it is determined that the water flowing through the water heat exchanger is going to be frozen, the anti-freezing control unit closes the control valve and opens the bypass valve to prevent the refrigerant from flowing into the water heat exchanger. For this reason, it is possible to prevent the water flowing through the water heat exchanger from being frozen without disturbing the operations of the outdoor unit and the indoor unit.

### Brief Description of Drawings

FIG. 1 is a circuit configuration diagram of an air conditioner according to an embodiment.
FIG. 2 is a functional block diagram of an outdoor controller and a water temperature controller according to the embodiment.
FIG. 3 is a functional block diagram of an outdoor controller and a water temperature controller according to the other embodiment.

### Description of Embodiments

Hereinafter, an embodiment of the invention will be described in detail with reference to the drawings. Additionally, the invention is not limited to the embodiment. Further, components of the embodiment include a component which can be easily replaced by the person skilled in the art or a component which has the substantially same configuration. Furthermore, an appropriate combination of the components to be described below can be used.

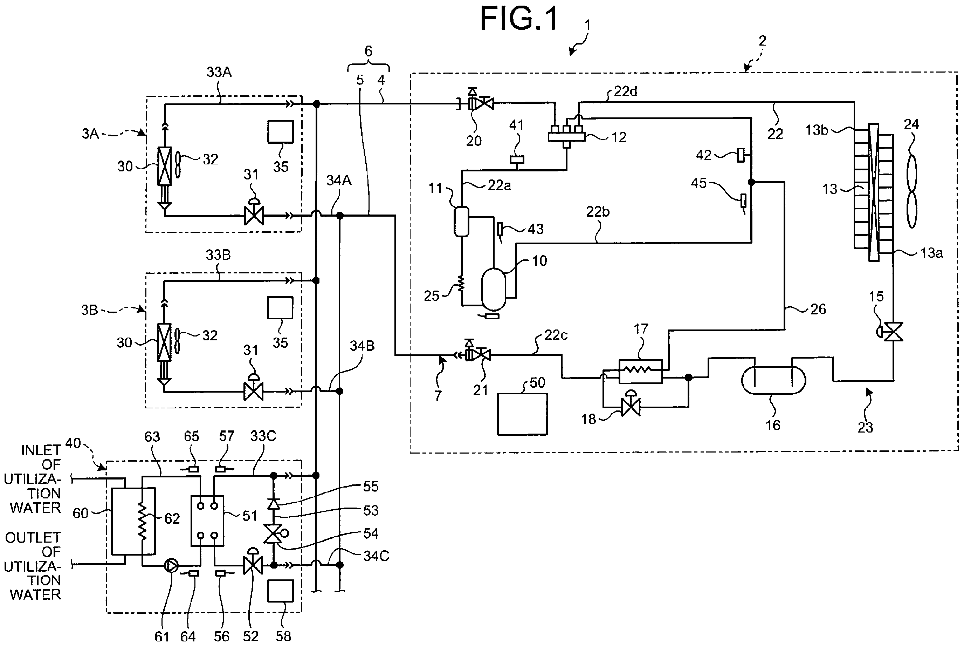

FIG. 1 is a circuit configuration diagram of an air conditioner according to the embodiment. An air conditioner 1 is a multi-type air conditioner including one outdoor unit 2, a plurality of (two in FIG. 1) indoor units 3A and 3B, and one water temperature control unit 40. The indoor units 3A and 3B and the water temperature control unit 40 are connected in parallel to a unit connection pipe 6 derived from the outdoor unit 2. The unit connection pipe 6 includes a liquid pipe 5 through which a liquid refrigerant flows and a gas pipe 4 through which a refrigerant gas having been gasified from the liquid refrigerant flows.

The outdoor unit 2 includes an inverter driven compressor 10 which compresses a refrigerant, an oil separator 11 which separates lubricant from a refrigerant gas, a four-way valve 12 which switches a refrigerant circulation direction, an outdoor heat exchanger 13 which exchanges heat between a refrigerant and external air, an outdoor expansion valve 15 which is used for an air heating operation and depressurizes and expands a refrigerant, a receiver 16 which stores a liquid refrigerant, a supercooling heat exchanger 17 which supercools a liquid refrigerant, a supercooling expansion valve 18 which controls an amount of a refrigerant distributed to the supercooling heat exchanger 17, a gas side operation valve 20, and a liquid side operation valve 21. Further, the outdoor unit 2 includes an outdoor controller 50 and the outdoor controller 50 controls the compressor 10, the four-way valve 12, the outdoor expansion valve 15, the supercooling expansion valve 18, and the like.

The devices near the outdoor unit 2 are sequentially connected through a refrigerant pipe 22 to form an outdoor side refrigerant circuit 23. More specifically, the refrigerant pipe 22 includes an ejection pipe 22a which connects the ejection side of the compressor 10 to the four-way valve 12 and a suction pipe 22b which connects the suction side of the compressor 10 to the four-way valve 12. Further, the refrigerant pipe 22 includes an outdoor side liquid pipe 22c which connects one end 13a of the outdoor heat exchanger 13 to the liquid side operation valve 21 and an outdoor side gas pipe 22d which connects the other end 13b of the outdoor heat exchanger 13 to the four-way valve 12.

Further, the outdoor unit 2 is provided with an outdoor fan 24 which blows external air to the outdoor heat exchanger 13. Additionally, an oil return circuit 25 which returns a predetermined amount of lubricant separated from an ejection refrigerant gas inside the oil separator 11 toward the compressor 10 is provided between the oil separator 11 and the suction pipe 22b of the compressor 10. The supercooling expansion valve 18 is provided at a branch liquid pipe 26 branched from the outdoor side liquid pipe 22c and the branch liquid pipe 26 is connected to the suction pipe 22b through the supercooling heat exchanger 17.

In the embodiment, the outdoor side refrigerant circuit 23 is provided with various pressure sensors or temperature sensors. Specifically, the ejection pipe 22a between the compressor 10 and the four-way valve 12 is provided with a high-pressure sensor 41 which detects a pressure of a high pressure refrigerant ejected from the compressor 10 and the suction pipe 22b between the four-way valve 12 and the branch liquid pipe 26 is provided with a low-pressure sensor (a low pressure detection unit) 42 which detects a pressure (a low pressure) of a low pressure refrigerant suctioned to the compressor 10. Further, the ejection pipe 22a between the compressor 10 and the oil separator 11 is provided with an ejection temperature sensor 43 which detects a temperature of an ejected refrigerant and the suction pipe 22b between the branch liquid pipe 26 and the compressor 10 is provided with a suction temperature sensor 45 which detects a temperature of a low pressure refrigerant suctioned to the compressor 10.

The gas pipe 4 and the liquid pipe 5 constituting the unit connection pipe 6 are refrigerant pipes connected to the gas side operation valve 20 and the liquid side operation valve 21 of the outdoor unit 2 and the pipe lengths thereof are appropriately set in response to a distance between the outdoor unit 2 and each of the indoor units 3A and 3B and the water temperature control unit 40 when installed in a construction site. A plurality of branching devices (not illustrated) are provided in the course of the gas pipe 4 and the liquid pipe 5 and an appropriate number of the indoor units 3A and 3B and the water temperature control unit 40 are connected through the branching devices. Accordingly, one refrigeration cycle (a refrigerant circuit) 7 is configured in a hermetic state.

Each of the indoor units 3A and 3B includes an indoor heat exchanger 30 which exchanges heat between indoor air and a refrigerant to cool or heat the indoor air and provides the indoor air for an indoor air conditioning operation, an indoor expansion valve 31 which is used for an air cooling operation, and an indoor fan 32 which circulates indoor air through the indoor heat exchanger 30 and the indoor units are connected to the branching device through indoor side branch gas pipes 33A and 33B and branch liquid pipes 34A and 34B. Further, each of the indoor units 3A and 3B is provided with an indoor controller 35 which controls the indoor expansion valve 31 and the like. Additionally, each of the indoor controllers 35 of the indoor units 3A and 3B is connected to the outdoor controller 50.

The water temperature control unit 40 includes a water heat exchanger 51 which exchanges heat between water and a refrigerant and a water temperature control expansion valve (a control valve) 52 which is used in an operation in which the water heat exchanger 51 serves as an evaporator and is connected to the branching device through an indoor side branch gas pipe 33C and a branch liquid pipe 34C. For example, a plate heat exchanger is used as the water heat exchanger 51. The water temperature control expansion valve 52 is provided at the refrigerant inlet side of the water heat exchanger 51 and is able to linearly adjust an opening degree from a fully closed state to a fully opened state. An operation in which the water heat exchanger 51 serves as the evaporator includes a defrost operation of preventing a frost of the outdoor heat exchanger 13 of the outdoor unit 2 in addition to a cooling operation of cooling water. Further, the water is a target heat exchange medium which exchanges heat with a refrigerant and may include brine.

The water temperature control unit 40 includes a bypass pipe 53 which connects the branch gas pipe 33C and the branch liquid pipe 34C to each other and bypasses the water heat exchanger 51 and the water temperature control expansion valve 52. The bypass pipe 53 is provided with a bypass valve 54 which controls a flow of a refrigerant inside the bypass pipe 53 and a check valve 55 which allows a flow of a refrigerant from the branch liquid pipe 34C to the branch gas pipe 33C and prohibits a flow in the opposite direction and these valves are provided in series.

A water circulation path 63 including a circulation pump 61 and a utilization heat exchanger 62 is connected to the water heat exchanger 51 and heat is exchanged between the water and the refrigerant when the water is circulated in the water circulation path 63. The utilization heat exchanger 62 is disposed inside a water temperature control tank 60 and heat is exchanged between utilization water stored in the water temperature control tank 60 and the water circulated in the water circulation path 63 so that the utilization water inside the water temperature control tank 60 is heated or cooled to adjust a temperature thereof. The utilization water of which a temperature is adjusted is sent to a water utilizing facility (not illustrated) and is used for an appropriate purpose in a floor heating operation or an air heating operation.

The water temperature control unit 40 is provided with various temperature sensors detecting a temperature of water and a refrigerant flowing through the water heat exchanger 51. Specifically, the branch liquid pipe 34C of the water heat exchanger 51 is provided with an inlet refrigerant temperature sensor 56 which detects an inlet refrigerant temperature and the branch gas pipe 33C of the water heat exchanger 51 is provided with an outlet refrigerant temperature sensor 57 which detects an outlet refrigerant temperature. Further, the water circulation path 63 of the water heat exchanger 51 is provided with an inlet water temperature sensor 64 which detects an inlet water temperature and an outlet water temperature sensor 65 which detects an outlet water temperature. Further, the water temperature control unit 40 includes a water temperature controller 58 which is connected to the outdoor controller 50 and controls the water temperature control expansion valve 52, the bypass valve 54, the circulation pump 61, and the like.

Next, an operation of the air conditioner 1 will be described. In the embodiment, a cooling operation of the water temperature control unit 40 is performed during the air cooling operations of the indoor units 3A and 3B and a heating operation of the water temperature control unit 40 is performed during the air heating operations of the indoor units 3A and 3B. The air cooling operation of the air conditioner 1 is performed as below. Lubricant included in the refrigerant is separated from a high-temperature and high pressure refrigerant gas, which is compressed by and ejected from the compressor 10, by the oil separator 11. Subsequently, the refrigerant gas is circulated to the outdoor heat exchanger 13 side by the four-way valve 12 and exchanges heat with the external air blowing from the outdoor fan 24 by the outdoor heat exchanger 13 so that the gas is condensed and liquefied. The liquid refrigerant passes through the outdoor expansion valve 15 and is temporarily stored inside the receiver 16.

While the liquid refrigerant of which a circulation amount is adjusted in the receiver 16 passes through the supercooling heat exchanger 17, a part of the liquid refrigerant flows from the outdoor side liquid pipe 22c and exchanges heat with the refrigerant adiabatically expanded by the supercooling expansion valve 18 to be supercooled. The liquid refrigerant is led from the outdoor unit 2 to the liquid pipe 5 through the liquid side operation valve 21 and is distributed to the branch liquid pipes 34A, 34B, and 34C of the water temperature control unit 40 and the indoor units 3A and 3B through the branching device. Meanwhile, the refrigerant used for a supercooling operation flows into the suction pipe 22b of the compressor 10 through the branch liquid pipe 26.

The liquid refrigerant which is distributed to the branch liquid pipes 34A and 34B flows into the indoor units 3A and 3B, is adiabatically expanded by the indoor expansion valves 31 to become a gas-liquid two-phase flow, and flows into the indoor heat exchangers 30. In the indoor heat exchanger 30, heat is exchanged between the refrigerant and the indoor air circulated by the indoor fan 32 and thus the indoor air is cooled and is provided for an indoor air cooling operation. Meanwhile, the refrigerant evaporates to become a gas and is integrated at the gas pipe 4 through the branch gas pipes 33A and 33B.

Further, the liquid refrigerant which is distributed to the branch liquid pipe 34C flows into the water temperature control unit 40, is adiabatically expanded by the water temperature control expansion valve 52 to become a gas-liquid two-phase flow, and flows into the water heat exchanger 51. In the water heat exchanger 51, heat is exchanged between the refrigerant and the water circulated in the water circulation path 63 by the operation of the circulation pump 61 so that the water is cooled and is provided to cool the utilization water inside the water temperature control tank 60. Meanwhile, the refrigerant evaporates to become a gas and flows through the branch gas pipe 33C to be integrated with the refrigerants flowing from the indoor units 3A and 3B at the gas pipe 4.

The refrigerant gas which is integrated at the gas pipe 4 returns to the outdoor unit 2 again, passes through the gas side operation valve 20 and the four-way valve 12, is integrated with the refrigerant gas from the supercooling heat exchanger 17, and is suctioned to the compressor 10. The refrigerant is compressed again by the compressor 10 and the above-described cycle is repeated to perform the cooling operation and the air cooling operation.

Meanwhile, the air heating operation is performed as below. Lubricant included in the refrigerant is separated from a high-temperature and high pressure refrigerant gas, which is compressed by and is ejected from the compressor 10, by the oil separator 11 and is circulated toward the gas side operation valve 20 through the four-way valve 12. The high pressure refrigerant gas is derived from the outdoor unit 2 through the gas side operation valve 20 and the gas pipe 4 and passes through the branch gas pipes 33A, 33B, and 33C to be introduced into the indoor units 3A and 3B and the water temperature control unit 40.

The high-temperature and high pressure refrigerant gas which is introduced into the indoor units 3A and 3B exchanges heat with the indoor air circulated through the indoor fan 32 at the indoor heat exchanger 30 and thus the heated indoor air blows to an indoor area for the air heating operation. Meanwhile, the refrigerant which is condensed and liquefied by the indoor heat exchanger 30 passes through the indoor expansion valve 31 and the branch liquid pipes 34A and 34B to be integrated at the liquid pipe 5 and returns to the outdoor unit 2.

Further, the high-temperature and high pressure refrigerant gas which is introduced into the water temperature control unit 40 exchanges heat with the water circulated in the water circulation path 63 by the operation of the circulation pump 61 of the water heat exchanger 51 so that the water is heated and is provided to heat the utilization water inside the water temperature control tank 60. Meanwhile, the refrigerant which is condensed and liquefied by the water heat exchanger 51 passes through the water temperature control expansion valve 52 and the branch liquid pipe 34C, is integrated with the refrigerants from the indoor units 3A and 3B at the liquid pipe 5, and is returned to the outdoor unit 2.

The refrigerant which returns to the outdoor unit 2 passes through the liquid side operation valve 21, reaches the supercooling heat exchanger 17 to be supercooled similarly to the air cooling operation, and flows into the receiver 16 to be temporarily stored therein, thereby adjusting the circulation amount. The liquid refrigerant is supplied to the outdoor expansion valve 15 to be adiabatically expanded and flows into the outdoor heat exchanger 13.

In the outdoor heat exchanger 13, heat is exchanged between the refrigerant and the external air blowing from the outdoor fan 24 and the refrigerant takes heat from the external air to evaporate as a gas. The refrigerant passes through the four-way valve 12 from the outdoor heat exchanger 13, is integrated with the refrigerant gas from the supercooling heat exchanger 17, is suctioned to the compressor 10, and is compressed again by the compressor 10. The above-described cycle is repeated to perform the air heating operation and the heating operation.

Incidentally, in the cooling operation of the water temperature control unit 40, the water heat exchanger 51 of the water temperature control unit 40 serves as the evaporator. Further, in the defrost operation of preventing the defrost of the outdoor heat exchanger 13 in the air heating operation, since the refrigerant flows in the same direction as that of the cooling operation of the water temperature control unit 40, the water heat exchanger 51 of the water temperature control unit 40 serves as the evaporator. When the circulation of the water in the water heat exchanger 51 is abnormally stopped or an outdoor temperature extremely falls during the cooling operation of the water temperature control unit 40 or the defrost operation of the outdoor heat exchanger 13, the evaporation temperature of the refrigerant supplied to the water heat exchanger 51 decreases and thus the water inside the water heat exchanger 51 is frozen and expanded. As a result, there is a concern that the water heat exchanger 51 may be damaged. For this reason, this configuration has a configuration in which an anti-freezing process is performed to prevent a damage of the water heat exchanger 51.

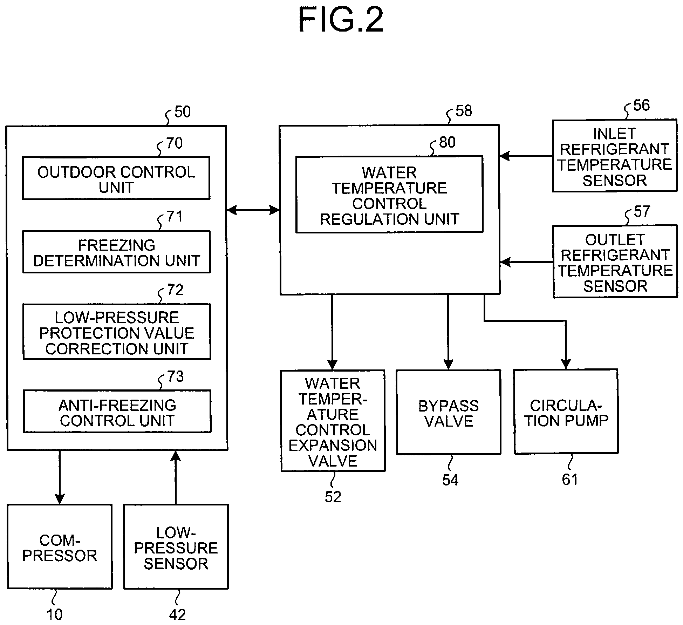

FIG. 2 is a functional block diagram of the outdoor controller and the water temperature controller according to the embodiment. The outdoor controller 50 includes, as illustrated in FIG. 2, an outdoor control unit 70, a freezing determination unit 71, a low-pressure protection value correction unit 72, and an anti-freezing control unit 73. Further, the compressor 10 and the low-pressure sensor 42 are connected to the outdoor controller 50. Here, other devices connected to the outdoor controller 50 are omitted.

The water temperature controller 58 includes a water temperature control regulation unit 80 which is able to communicate with the outdoor controller 50 and controls the operation of the water temperature control unit 40 in cooperation with the outdoor control unit 70 of the outdoor controller 50. The water temperature control expansion valve 52, the bypass valve 54, the circulation pump 61, the inlet refrigerant temperature sensor 56, and the outlet refrigerant temperature sensor 57 are connected to the water temperature controller 58. Here, other devices connected to the water temperature controller 58 are omitted.

The outdoor control unit 70 controls an entire operation of the air conditioner 1. The freezing determination unit 71 determines whether the water flowing through the water heat exchanger 51 is going to be frozen during the cooling operation of the water temperature control unit 40 or the defrost operation of the outdoor heat exchanger 13. In the embodiment, the possibility of the freezing of the water is determined on the basis of the pressure of the refrigerant circulated between the units. According to this configuration, it is possible to detect the possibility that the water is going to be partly frozen in the microscopic structure inside the water heat exchanger 51 even when the refrigerant circulation amount is small and the refrigerant temperature cannot be highly accurately detected by, for example, the inlet refrigerant temperature sensor 56 and the outlet refrigerant temperature sensor 57 so that the possibility of the freezing of the water cannot be detected. Specifically, the freezing determination unit 71 compares a low pressure LP of the low pressure refrigerant detected by the low-pressure sensor 42 with a predetermined low pressure-protection value LPₚₕₘᵤ and determines that the water is going to be frozen when the low pressure LP is lower than the low-pressure protection value LPₚₕₘᵤ. The low-pressure protection value LPₚₕₘᵤ is a reference value which is set in consideration of the pressure loss of the refrigerant generated when the refrigerant flows through the unit connection pipe 6 connecting the outdoor unit 2 and the water temperature control unit 40 to each other. The low pressure LP of the low pressure refrigerant which is detected by the low-pressure sensor 42 is set to a value which is lower by the pressure loss than the pressure of the refrigerant flowing through the water heat exchanger 51. For this reason, since a value obtained by subtracting a value corresponding to the pressure loss from the value of the low pressure LP is set as the low-pressure protection value LPₚₕₘᵤ and the possibility of the freezing of the water is determined on the basis of the low-pressure protection value LPₚₕₘᵤ, it is possible to simply and highly accurately determine whether the water inside the water heat exchanger 51 is going to be frozen even in a configuration in which the water temperature control unit 40 is disposed at a position separated from the outdoor unit 2.

The low-pressure protection value correction unit 72 corrects the low-pressure protection value LPₚₕₘᵤ in accordance with the operation state of the water temperature control unit 40. Since the pressure loss of the refrigerant changes in accordance with the amount of the refrigerant flowing through the unit connection pipe 6, it is possible to improve the accuracy of the low-pressure protection value LPₚₕₘᵤ serving as a reference value used to determine the possibility of the freezing of the water by correcting the low-pressure protection value LPₚₕₘᵤ in accordance with the operation state of the water temperature control unit 40. The anti-freezing control unit 73 performs an anti-freezing operation when the possibility of the freezing of the water is determined under the control of the outdoor control unit 70. A detailed operation will be described below.

The water temperature control regulation unit 80 of the water temperature control unit 40 monitors the inlet temperature and the outlet temperature of the refrigerant flowing through the water heat exchanger 51 by the use of the inlet refrigerant temperature sensor 56 and the outlet refrigerant temperature sensor 57. Further, the water temperature control regulation unit 80 stores a freezing reference temperature, an anti-frost temperature, and an anti-frost cancellation temperature which are set in advance and outputs a signal to the outdoor control unit 70 whenever the detected inlet/outlet temperature of the refrigerant reaches the freezing reference temperature, the anti-frost temperature, or the anti-frost cancellation temperature. The freezing reference temperature indicates a temperature at which the water inside the water heat exchanger 51 is going to be frozen with high possibility when the inlet temperature or the outlet temperature of the refrigerant flowing through the water heat exchanger 51 falls to the freezing reference temperature and is set to 0°C in the embodiment. When the inlet temperature or the outlet temperature of the refrigerant reaches the freezing reference temperature, the water temperature control regulation unit 80 performs a thermo-off operation of the water temperature control unit 40 in order to stop the operation of the water temperature control unit 40. Further, the water temperature control regulation unit 80 may perform a control in which the water temperature control expansion valve 52 is closed and the bypass valve 54 is opened instead of the thermo-off operation.

Further, the anti-frost temperature indicates a temperature at which the water inside the water heat exchanger 51 is going to be frozen. The anti-frost temperature is set to a temperature higher than the freezing reference temperature (in the embodiment, 3°C) and is used to correct the low-pressure protection value LPₚₕₘᵤ. Further, the anti-frost cancellation temperature indicates a temperature at which the water inside the water heat exchanger 51 is not going to be frozen and is set to a temperature higher than the anti-frost temperature (in the embodiment, 5°C). These values of the freezing reference temperature, the anti-frost temperature, and the anti-frost cancellation temperature can be appropriately changed.

Next, a determination process operation of determining the possibility of the freezing of the water will be described. The determination process operation is performed in an operation in which the water heat exchanger 51 of the water temperature control unit 40 serves as the evaporator. Here, the defrost operation of the outdoor heat exchanger 13 will be exemplified. When the defrost operation is performed, the water temperature control regulation unit 80 monitors the inlet temperature and the outlet temperature of the refrigerant flowing through the water heat exchanger 51.

Further, the freezing determination unit 71 acquires the low pressure LP of the low pressure refrigerant detected by the low-pressure sensor 42 and reads the predetermined low-pressure protection value LPₚₕₘᵤ during the defrost operation to monitor whether the low pressure LP becomes lower than the low-pressure protection value LPₚₕₘᵤ. At the same time, the low-pressure protection value correction unit 72 corrects the low-pressure protection value LPₚₕₘᵤ on the basis of the monitored refrigerant temperature. Specifically, when the inlet temperature and the outlet temperature of the refrigerant fall to the anti-frost temperature, the low-pressure protection value LPₚₕₘᵤ is corrected to a value obtained by adding a predetermined value to the former value. Meanwhile, when the inlet temperature and the outlet temperature of the refrigerant rise to the anti-frost cancellation temperature, the low-pressure protection value LPₚₕₘᵤ is corrected to a value obtained by subtracting a predetermined value from the former value after this state is continued for a predetermined time. In this way, since the low-pressure protection value LPₚₕₘᵤ is corrected on the basis of the temperature of the refrigerant flowing through the water heat exchanger 51, it is possible to further improve the determination accuracy in the possibility of the freezing of the water.

In the determination process, the freezing determination unit 71 determines that the water is going to be frozen when the low pressure LP becomes lower than the low-pressure protection value LPₚₕₘᵤ. Then, the anti-freezing control unit 73 performs a control so that the low pressure LP rises to a value equal to or larger than the low-pressure protection value LPₚₕₘᵤ by decreasing the operation frequency (ability) of the compressor 10. Further, the anti-freezing control unit 73 performs a control in which the water temperature control expansion valve 52 is closed and the bypass valve 54 is opened through the water temperature control regulation unit 80 along with the operation frequency control of the compressor 10. Accordingly, since the refrigerant flows through the bypass pipe 53, it is possible to prevent the refrigerant from flowing into the water heat exchanger 51 and to prevent the water flowing through the water heat exchanger 51 from being frozen. Further, since the high-temperature refrigerant bypasses the water heat exchanger 51, it is possible to expect a case where an operation point changes in a direction in which the freezing of the water is prevented in accordance with an increase in low pressure of the air conditioner 1. Furthermore, since heat can be drawn from the indoor air by the heat exchange between the refrigerant and the indoor air at the indoor heat exchangers 30 of the indoor units 3A and 3B in the defrost operation, it is possible to continuously perform the defrost operation without stopping the outdoor unit 2 or the indoor units 3A and 3B.

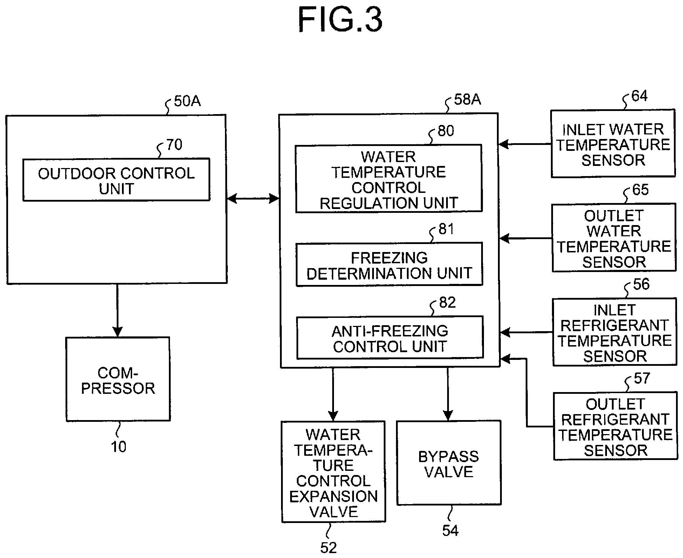

Next, the other embodiment will be described. FIG. 3 is a functional block diagram of the outdoor controller and the water temperature controller according to the embodiment. As illustrated in FIG. 3, an outdoor controller 50A includes the outdoor control unit 70. Further, the compressor 10 is connected to the outdoor controller 50A. Here, other devices connected to the outdoor controller 50A are omitted.

A water temperature controller 58A can communicate with the outdoor controller 50A. The water temperature controller 58A includes the water temperature control regulation unit 80 which controls the operation of the water temperature control unit 40, a freezing determination unit 81, and an anti-freezing control unit 82. The water temperature control expansion valve 52, the bypass valve 54, the inlet water temperature sensor 64, the outlet water temperature sensor 65, the inlet refrigerant temperature sensor 56, and the outlet refrigerant temperature sensor 57 are connected to the water temperature controller 58A. Here, other devices connected to the water temperature controller 58A are omitted. In the above-described embodiment, the freezing determination unit 71 compares the predetermined low-pressure protection value LPₚₕₘᵤ with the low pressure LP of the low pressure refrigerant detected by the low-pressure sensor 42 and determines that the water is going to be frozen when the low pressure LP is lower than the low-pressure protection value LPₚₕₘᵤ. However, in the other embodiment, the possibility of the freezing of the water is determined on the basis of the temperature of the water flowing through the water heat exchanger 51. In this configuration, since the temperature of the water corresponding to the target is directly detected, it is possible to easily determine whether the water is going to be frozen even when the water in a condition (for example, a water temperature or water quantity) other than a specification range is used in the water temperature control unit 40.

The water temperature control regulation unit 80 monitors the inlet temperature and the outlet temperature of the water flowing through the water heat exchanger 51 by the use of the inlet water temperature sensor 64 and the outlet water temperature sensor 65. Further, the water temperature control regulation unit 80 stores a freezing reference temperature and a freezing reference cancellation temperature which are set in advance and outputs a signal to the freezing determination unit 81 and the anti-freezing control unit 82 when the detected inlet/outlet temperature of the water reaches the freezing reference temperature or the freezing reference cancellation temperature. The freezing reference temperature indicates a temperature at which the water inside the water heat exchanger 51 is going to be frozen with high possibility and is set to 4°C in the embodiment. Further, the freezing reference cancellation temperature indicates a temperature at which the water inside the water heat exchanger 51 is not going to be frozen and is set to a temperature higher than the freezing reference temperature (in the embodiment, 7°C).

The freezing determination unit 81 determines that the water is going to be frozen when the inlet temperature and the outlet temperature of the water become lower than the freezing reference temperature. In this case, the anti-freezing control unit 82 performs a thermo-off operation of the water temperature control unit 40 in order to stop the operation of the water temperature control unit 40. Further, the anti-freezing control unit 82 may perform a control in which the water temperature control expansion valve 52 is closed and the bypass valve 54 is opened instead of the thermo-off operation. Accordingly, since the refrigerant flows through the bypass pipe 53, it is possible to prevent the refrigerant from flowing into the water heat exchanger 51 and to prevent the water flowing through the water heat exchanger 51 from being frozen.

Further, in the other embodiment, it is possible to determine whether the water is going to be frozen on the basis of the temperature of the refrigerant flowing through the water heat exchanger 51. In this configuration, it is possible to detect a possibility that the water is partly frozen in the vicinity of the refrigerant inlet inside the water heat exchanger 51 even when the inlet/outlet water temperature of the water heat exchanger 51 is equal to or higher than the freezing reference temperature.

The water temperature control regulation unit 80 monitors the inlet temperature and the outlet temperature of the refrigerant flowing through the water heat exchanger 51 by the use of the inlet refrigerant temperature sensor 56 and the outlet refrigerant temperature sensor 57. Further, as described above, the water temperature control regulation unit 80 stores the freezing reference temperature and the freezing reference cancellation temperature which are set in advance and outputs a signal to the freezing determination unit 81 and the anti-freezing control unit 82 whenever the detected inlet/outlet temperature of the refrigerant reaches the freezing reference temperature or the freezing reference cancellation temperature. The freezing reference temperature indicates a temperature at which the water inside the water heat exchanger 51 is going to be frozen with extremely high possibility when the inlet temperature or the outlet temperature of the refrigerant flowing through the water heat exchanger 51 falls to the freezing reference temperature and is set to 0°C in the embodiment. Further, the freezing reference cancellation temperature indicates a temperature at which the water inside the water heat exchanger 51 is not going to be frozen when the inlet temperature or the outlet temperature of the refrigerant flowing through the water heat exchanger 51 continuously rises to the freezing reference cancellation temperature or more for a predetermined time (for example, 180 seconds) and is set to a temperature higher than the freezing reference temperature (in the embodiment, 5°C).

When the inlet temperature or the outlet temperature of the refrigerant flowing through the water heat exchanger 51 falls to the freezing reference temperature, the freezing determination unit 81 determines that the water flowing through the water heat exchanger 51 is going to be frozen. In this case, the anti-freezing control unit 82 performs a thermo-off operation of the water temperature control unit 40 in order to stop the operation of the water temperature control unit 40. Further, the anti-freezing control unit 82 may perform a control in which the water temperature control expansion valve 52 is closed and the bypass valve 54 is opened instead of the thermo-off operation. Accordingly, since the refrigerant passes through the bypass pipe 53, it is possible to prevent the refrigerant from flowing into the water heat exchanger 51 and to prevent the water flowing through the water heat exchanger 51 from being frozen.

As described above, the air conditioner 1 of the embodiment includes the outdoor unit 2 which includes the compressor 10 compressing a refrigerant and the outdoor heat exchanger 13 exchanging heat between a refrigerant and external air, the indoor units 3A and 3B each of which includes the indoor heat exchanger 30 connected to the outdoor unit 2 through the unit connection pipe 6 and exchanging heat between indoor air and a refrigerant supplied from the outdoor unit 2, and the water temperature control unit 40 which is connected to the outdoor unit 2 in parallel to the indoor units 3A and 3B and includes the water heat exchanger 51 exchanging heat between water and a refrigerant supplied from the outdoor unit 2, the water temperature control unit 40 includes the water temperature control expansion valve 52 which is provided at the refrigerant inlet side of the water heat exchanger 51, the bypass pipe 53 which bypasses the water temperature control expansion valve 52 and the water heat exchanger 51, and the bypass valve 54 which is provided at the bypass pipe 53. Then, the freezing determination units 71 and 81 are provided to determine whether the water flowing through the water heat exchanger 51 is going to be frozen during an operation in which the water heat exchanger 51 serves as the evaporator and the anti-freezing control units 73 and 82 are provided to prevent the water from being frozen by closing the water temperature control expansion valve 52 and opening the bypass valve 54 when a possibility of the freezing of the water is determined. Accordingly, since it is possible to prevent the refrigerant from flowing into the water heat exchanger 51, it is possible to prevent the water flowing through the water heat exchanger 51 from being frozen without disturbing the operations of the outdoor unit 2 and the indoor units 3A and 3B.

Further, according to the embodiment, since the freezing determination unit 81 determines that the water is going to be frozen when a temperature of the water flowing through the water heat exchanger 51 becomes lower than the freezing reference temperature, it is possible to simply determine whether the water flowing through the water heat exchanger 51 is going to be frozen even when the water in a condition other than a specification range is used in the water temperature control unit 40.

Further, according to the embodiment, since the freezing determination unit 81 determines that the water is going to be frozen when the temperature of the refrigerant flowing through the water heat exchanger 51 is lower than the freezing reference temperature, it is possible to detect a possibility that the water is partly frozen in the vicinity of the refrigerant inlet inside the water heat exchanger 51 even when the inlet/outlet water temperature of the water heat exchanger 51 is equal to or higher than the freezing reference temperature.

Further, according to the embodiment, since the freezing determination unit 71 determines that the water flowing through the water heat exchanger 51 is going to be frozen when the low pressure LP is lower than the predetermined low-pressure protection value LPₚₕₘᵤ set in consideration of the pressure loss generated when the refrigerant flows through the unit connection pipe 6, it is possible to highly accurately determine a possibility that the water in the water heat exchanger 51 is going to be frozen even in a configuration in which the water temperature control unit 40 is disposed at a position separated from the outdoor unit 2.

Further, according to the embodiment, since the low-pressure protection value correction unit 72 is provided which corrects the low-pressure protection value LPₚₕₘᵤ to a high value when a temperature of the refrigerant flowing through the water heat exchanger 51 falls to the anti-frost temperature higher than the freezing reference temperature of the water and corrects the low-pressure protection value LPₚₕₘᵤ to a low value when the temperature of the refrigerant rises to the anti-frost cancellation temperature higher than the anti-frost temperature, it is possible to further improve the determination accuracy by correcting the low-pressure protection value LPₚₕₘᵤ corresponding to a reference for determining whether the water is going to be frozen in accordance with the operation state of the water temperature control unit 40.

Further, according to the embodiment, since a control is performed so that the water temperature control expansion valve 52 is closed and the bypass valve 54 is opened when it is determined that the water in the water heat exchanger 51 is going to be frozen during the defrost operation of preventing the frost of the outdoor heat exchanger 13, it is possible to prevent the refrigerant from flowing into the water heat exchanger 51 and to prevent the water flowing through the water heat exchanger 51 from being frozen. Further, since it is possible to draw the heat of the indoor air by exchanging heat between the indoor air and the refrigerant supplied from the outdoor unit 2 in the indoor heat exchangers 30 of the indoor units 3A and 3B during the defrost operation, it is possible to continuously perform the defrost operation.

While one embodiment of the invention has been described, the embodiment is merely an example and does not limit the scope of the invention. The embodiment can be modified into various forms and various omissions, substitutions, and modifications can be made without departing from the scope of the invention as defined by the claims. When the embodiment or the modification thereof is included in the scope of the invention, the embodiment or the modification thereof is also included in the invention of claims and the equivalent thereof. In the embodiment, the defrost operation has been described as an operation in which the water heat exchanger 51 of the water temperature control unit 40 serves as the evaporator, but a water cooling operation may be, of course, used.

## Claims

1. An air conditioner (1) **characterized in that** it comprises:
an outdoor unit (2) which includes a compressor compressing a refrigerant and an outdoor heat exchanger exchanging heat between the refrigerant and external air;
an indoor unit (3A,3B) which is connected to the outdoor unit through a unit connection pipe and includes an indoor heat exchanger exchanging heat between indoor air and the refrigerant supplied from the outdoor unit; and
a water temperature control unit (40) which is connected to the outdoor unit in parallel to the indoor unit and includes a water heat exchanger exchanging heat between water and the refrigerant supplied from the outdoor unit,
wherein the water temperature control unit includes a control valve which is provided at a refrigerant inlet side of the water heat exchanger, a bypass pipe which bypasses the control valve and the water heat exchanger, and a bypass valve which is provided at the bypass pipe, and
wherein the air conditioner further comprises:
a freezing determination unit which determines whether the water flowing through the water heat exchanger is going to be frozen during an operation in which the water heat exchanger serves as an evaporator; and
an anti-freezing control unit which prevents the water from being frozen by closing the control valve and opening the bypass valve when it is determined that the water is going to be frozen.

2. The air conditioner according to claim 1, wherein the freezing determination unit determines that the water is going to be frozen when a temperature of the water flowing through the water heat exchanger becomes lower than a freezing reference temperature.

3. The air conditioner according to claim 1, wherein the freezing determination unit determines that the water is going to be frozen when a temperature of the refrigerant flowing through the water heat exchanger becomes lower than the freezing reference temperature.

4. The air conditioner according to claim 1, wherein the freezing determination unit determines that the water is going to be frozen when a suction pressure of the compressor becomes lower than a predetermined low-pressure protection value set in consideration of pressure loss generated when the refrigerant flows through the unit connection pipe.

5. The air conditioner according to claim 4, further comprising:
a low-pressure protection value correction unit which corrects the low-pressure protection value to a high value when a temperature of the refrigerant flowing through the water heat exchanger falls to an anti-frost temperature higher than the freezing reference temperature and corrects the low-pressure protection value to a low value when the temperature of the refrigerant rises to an anti-frost cancellation temperature higher than the anti-frost temperature.

6. The air conditioner according to any one of claims 1 to 5, wherein the operation in which the water heat exchanger serves as the evaporator includes a defrost operation of preventing a frost of the outdoor heat exchanger.
